# EUROPÄISCHE PATENTANMELDUNG

(11) **EP 0 941 790 A1**
(43) Veröffentlichungstag der Anmeldung: **15.09.1999**
(21) Anmeldenummer: 98104209.6
(22) Anmeldetag: 10.03.1998
(51) Int. Cl.: B23B 3/06, B23Q 3/155

(54) **Drehmaschine**

(71) Anmelder: MASCHINENFABRIK BERTHOLD HERMLE AKTIENGESELLSCHAFT, D-78559 Gosheim (DE)
(72) Erfinder: Braun, Hans-Dieter, 78665 Frittlingen (DE)
(74) Vertreter: Vetter, Hans, Dipl.-Phys. Dr.

(57) **Zusammenfassung**

Es wird eine Maschine zur spanenden Bearbeitung von insbesondere stangenförmigen Werkstücken vorgeschlagen, die einen in mehreren Achsen mittels einer Schlittenanordnung (11) bewegbaren Bearbeitungskopf (14) zur Aufnahme rotierender Werkzeuge sowie eine Werkstück-Spanneinrichtung (25) aufweist, die mit einer Drehantriebsvorrichtung zur Winkelpositionierung des eingespannten Werkstücks versehen ist. Der Bearbeitungskopf (14) ist schwenkbar an der mit motorischen Antriebsvorrichtungen versehenen, aus drei in den drei Raumrichtungen bewegbaren Schlitten (13, 16, 18) bestehenden Schlittenanordnung (11) gelagert und besitzt einen motorischen Schwenkantrieb. Die Werkstück-Spanneinrichtung (25) weist eine horizontale Drehachse auf. Hierdurch kann in vorteilhafter Weise eine Fünf-Achs-Bearbeitung insbesondere von stangenförmigen Werkstücken durchgeführt werden, wobei eine kostengünstige, sehr kompakte Maschine mit hoher Steifigkeit erreicht wurde.

## Beschreibung

Die Erfindung betrifft eine Maschine zur spanenden Bearbeitung von insbesondere stangenförmigen Werkstücken, mit einem in mehreren Achsen mittels einer Schlittenanordnung bewegbaren Bearbeitungskopf zur Aufnahme rotierender Werkzeuge und mit einer Werkstück-Spanneinrichtung, die mit einer Drehantriebsvorrichtung zur Winkelpositionierung des eingespannten Werkstücks versehen ist.

Bei einer derartigen, aus der DE 196 33 899 bekannten Maschine ist die Schlittenanordnung auf einem Schwenktisch angeordnet, so daß der Bearbeitungskopf um den zu bearbeitenden Endbereich des Werkstücks herumgeschwenkt werden kann. Ein solcher Schwenktisch, der eine Drei-Achsen-Schlittenanordnung trägt, ist jedoch konstruktiv relativ aufwendig und kostenintensiv, und konstruktionsbedingt kann der Endbereich des zu bearbeitenden Werkstücks nur relativ geringfügig aus dem Bearbeitungskopf herausragen. Das Herumschwenken der Schlittenanordnung mittels des Schwenktischs ist relativ zeitraubend, und die Schlittenanordnung verdeckt in vielen Schwenkpositionen die freie Sicht der Bedienperson auf das Werkstück.

Eine Aufgabe der vorliegenden Erfindung besteht darin, eine Maschine der eingangs genannten Gattung so zu verbessern, daß insbesondere die Stangenbearbeitung bei relativ kleinen Bearbeitungsbewegungen und gleichzeitig kostengünstigerem Aufbau realisiert werden kann, wobei ständig eine gute Sicht auf das zu bearbeitende Werkstück vorliegen soll.

Diese Aufgabe wird erfindungsgemäß dadurch gelöst, daß der Bearbeitungskopf schwenkbar an der mit motorischen Antriebsvorrichtungen versehenen, aus drei in den drei Raumrichtungen bewegbaren Schlitten bestehenden Schlittenanordnung gelagert ist und einen motorischen Schwenkantrieb besitzt, und daß die Werkstück-Spanneinrichtung eine horizontale Drehachse aufweist.

Durch die schwenkbare Anordnung des Bearbeitungskopfs an der mit motorischen Antriebsvorrichtungen versehenen Schlittenanordnung in Verbindung mit den drei in den drei Raumrichtungen bewegbaren Schlitten ist eine vorteilhafte Fünf-Achs-Bearbeitung beispielsweise an Stangenenden mit dem Ziel einer Teile-Komplettbearbeitung möglich. Die als horizontales Teilfutter ausgebildete Werkstück-Spanneinrichtung ermöglicht dabei ein günstiges Spannen insbesondere von langen stangenförmigen Werkstücken bei der Stangenbearbeitung. Da im Gegensatz zum eingangs genannten Stand der Technik ein Herumschwenken der Schlittenanordnung um das zu bearbeitende Stangenende nicht mehr erforderlich ist, ergibt sich eine gute Einsicht und Zugänglichkeit zum zu bearbeitenden Werkstück. Dabei können Standard-Werkzeugaufnahmen in Verbindung mit dem Bearbeitungskopf verwendet werden.

Durch den Wegfall eines Schwenktisches für die Schlittenanordnung gemäß dem eingangs angegebenen Stand der Technik wird eine deutliche Kostenreduzierung erreicht. Da die Bearbeitungsstelle sehr nahe an allen Führungen angeordnet ist bzw. werden kann, wird eine sehr kompakte Maschine mit hoher Steifigkeit erreicht.

Durch die in den Unteransprüchen aufgeführten Maßnahmen sind vorteilhafte Weiterbildungen und Verbesserungen der im Anspruch 1 angegebenen Maschine möglich.

Einen wesentlichen Beitrag zur guten Zugänglichkeit zum Werkstück und zur guten Einsicht und Beobachtung des Werkstücks während der Bearbeitungsvorgänge leistet die lineare Verfahrbarkeit der Schlittenanordnung parallel zur Drehachse der Werkstück-Spanneinrichtung und versetzt zu dieser. Die Bedienungsperson kann dadurch auf der einen Seite der Werkstück-Spanneinrichtung und gegenüber der Schlittenanordnung positioniert werden, so daß die Schlittenanordnung niemals die Zugänglichkeit zum Werkstück und die freie Sicht beeinträchten kann.

Ein insbesondere als horizontales Drehmagazin ausgebildetes Werkzeugmagazin für rotierende Werkzeuge fördert den automatischen Fertigungsablauf und den schnellen Werkzeugwechsel am Bearbeitungskopf. Hierzu ist die Schlittenanordnung zur Bewegung des Bearbeitungskopfs zwischen der Arbeitsposition und der Werkzeugwechselposition am Werkzeugmagazin ausgebildet, so daß für den Werkzeugwechselvorgang keine zusätzlichen Greifer oder dergleichen erforderlich sind.

Das Werkzeugmagazin enthält vorzugsweise auch vom Bearbeitungskopf aufnehmbare Greif- und/oder Handhabungseinrichtungen, wobei der mit einer solchen Greif- und/oder Handhabungseinrichtung versehene Bearbeitungskopf zur Handhabung von Werkstücken ausgebildet ist. Hierdurch können beispielsweise an einem Ende bearbeitete Werkstücke ergriffen, aus der Werkstück-Spanneinrichtung entnommen, gedreht und dann wieder in die Werkstück-Spanneinrichtung zurückgebracht werden, um auch am anderen Ende bearbeitet zu werden. Dies ermöglicht in sehr einfacher Weise einen automatischen Fertigungsablauf ohne zusätzliche Handhabungseinrichtungen.

Zur Bearbeitung von stangenförmigen Werkstücken sind zweckmäßigerweise ein Stangenmagazin und eine Vorschubeinrichtung zum Vorschub des jeweils in der Werkstück-Spanneinrichtung gehaltenen Werkstücks in dessen Längsrichtung vorgesehen. Als Vorschubeinrichtung kann vorzugsweise auch der Bearbeitungskopf beispielsweise in Verbindung mit einer Greif- und/oder Handhabungseinrichtung sein.

Zum universelleren Einsatz der erfindungsgemäßen Maschine ist eine Drehmeißel-Halterung zwischen einer Warteposition und einer Arbeitsposition mittels der Schlittenanordnung bewegbar, wobei die Drehantriebsvorrichtung zur Rotation der Werkstück-Spanneinrichtung auch einen für die Drehbearbeitung geeigneten Drehzahl bereich aufweist.

Eine so ausgebildete Maschine kann somit nicht nur mittels des Bearbeitungskopfs eine Fräs-, Schleif- und/oder Bohrbearbeitung des Werkstücks durchführen, sondern zusätzlich ist auch eine Drehbearbeitung bei rotierendem Werkstück möglich. Dabei besteht der besondere Vorteil darin, daß der Bearbeitungskopf und die Drehmeißel-Halterung durch dieselbe Schlittenanordnung bewegbar sind, was eine deutliche Kostenreduzierung im Hinblick auf herkömmliche Universal-Bearbeitungsmaschinen ermöglicht. Die Werkstückspanneinrichtung dient nicht nur zur Winkelpositionierung des eingespannten Werkstücks im Sinne eines Teilfutters, sondern zusätzlich noch als Spanneinrichtung für die Drehbearbeitung. Die Anordnung der Bearbeitungsstelle sehr nahe an allen Führungen und die dadurch erreichte sehr kompakte Maschine mit hoher Steifigkeit eignet sich besonders zur kombinierten Dreh-/Fräs-Komplettbearbeitung.

Die Drehmeißel-Halterung ist in vorteilhafter Weise an einem Schlitten angeordnet, der durch einen in der entsprechenden Richtung, insbesondere der horizontalen Richtung zum Werkstück hin, bewegbaren ersten Schlitten der Schlittenanordnung antreibbar ist. Hierdurch wird für die Bewegung sowohl der Drehmeißel-Halterung als auch des Bearbeitungskopfs in dieser Richtung nur eine einzige Antriebsvorrichtung benötigt.

Für eine Bearbeitung lediglich durch den Bearbeitungskopf wird der Schlitten für die Drehmeißel-Halterung durch eine lösbare Kopplungseinrichtung entkoppelt. Hierzu dient vorzugsweise ein senkrecht zur Bewegungsrichtung des ersten Schlittens, insbesondere vertikal bewegbarer zweiter Schlitten der Schlittenanordnung, der den ersten Schlitten mit dem Schlitten der Drehmeißel-Halterung verkoppelt und entkoppelt, wobei der Schlitten der Drehmeißel-Halterung der Bewegung des zweiten Schlittens nicht folgt. Die Kopplungsposition ist dabei zweckmäßigerweise die unterste Position des zweiten Schlittens, wobei der an diesem zweiten Schlitten angeordnete Bearbeitungskopf in der Kopplungsposition unterhalb der Drehachse der Werkstück-Spanneinrichtung angeordnet ist, so daß er bei der Drehbearbeitung zwar mitbewegt wird, jedoch nicht stört.

Eine günstige konstruktive Ausgestaltung besteht auch darin, daß ein dritter Schlitten eine Bewegungsrichtung senkrecht zu der der übrigen Schlitten der Schlittenanordnung besitzt und parallel zur Drehachse der Werkstück-Spanneinrichtung verfahrbar ist, wobei der dritte Schlitten insbesondere die übrigen Schlitten sowie vorzugsweise den Schlitten der Drehmeißel-Halterung trägt, falls ein solcher vorgesehen ist. Dieser dritte Schlitten bewegt somit sowohl den Bearbeitungskopf als auch die Drehmeißel-Halterung in seiner Bewegungsrichtung, so daß auch hier eine Antriebseinrichtung für beide Bearbeitungsvorgänge ausreicht.

Die Drehmeißel-Halterung ist zweckmäßigerweise als Drehrevolver-Halterung ausgebildet, so daß verschiedene Drehmeißel eingesetzt werden können, was für einen automatischen Fertigungsablauf von großem Vorteil ist.

Zur Bearbeitung, insbesondere zur Drehbearbeitung längerer Werkzeuge, ist in vorteilhafter Weise neben oder an der Werkstück-Spanneinrichtung ein parallel zu deren Drehachse verfahrbarer und in diese Drehachse einschwenkbarer Reitstock vorgesehen. Durch die Schwenkbarkeit kann er von der Bearbeitungsstelle weggeschwenkt werden, wenn er nicht benötigt wird.

Ein Ausführungsbeispiel der Erfindung ist in der Zeichnung dargestellt und in der nachfolgenden Beschreibung näher erläutert. Es zeigen:
- Fig. 1: eine kombinierte Maschine als Ausführungsbeispiel der Erfindung in der Draufsicht bei der Bearbeitung durch den Bearbeitungskopf mittels eines rotierenden Werkzeugs,
- Fig. 2: dieselbe Maschine in der Vorderansicht bei der Bearbeitung mittels des schräggeschwenkten Bearbeitungskopfs,
- Fig. 3: diese Maschine in der Vorderansicht, wobei der Bearbeitungskopf mit einem Handhabungsgreifer für ein Werkstück versehen ist, und
- Fig. 4: dieselbe Maschine in der Draufsicht bei der Drehbearbeitung eines Werkstücks durch einen Drehmeißel mit eingeschwenktem Reitstock.

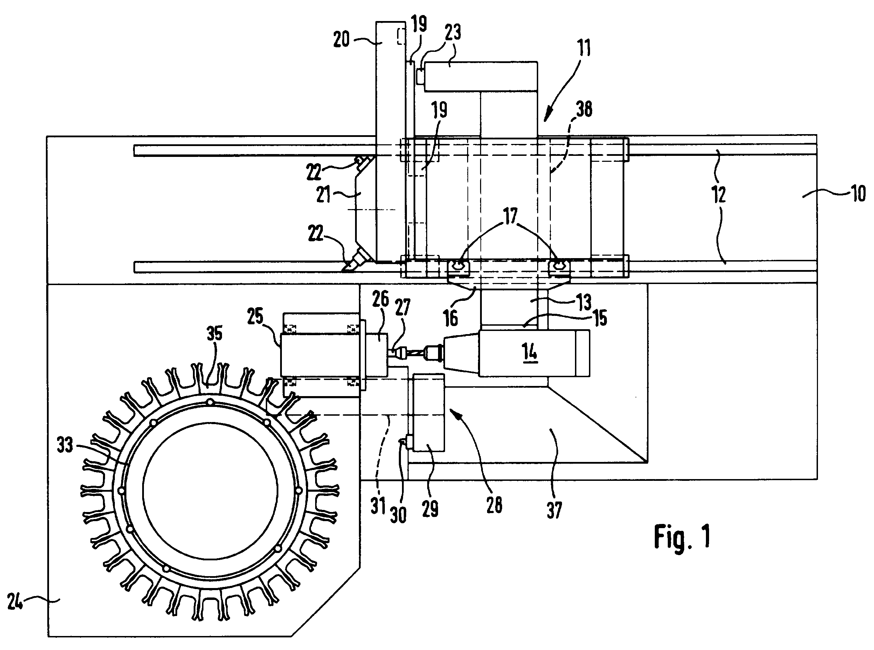

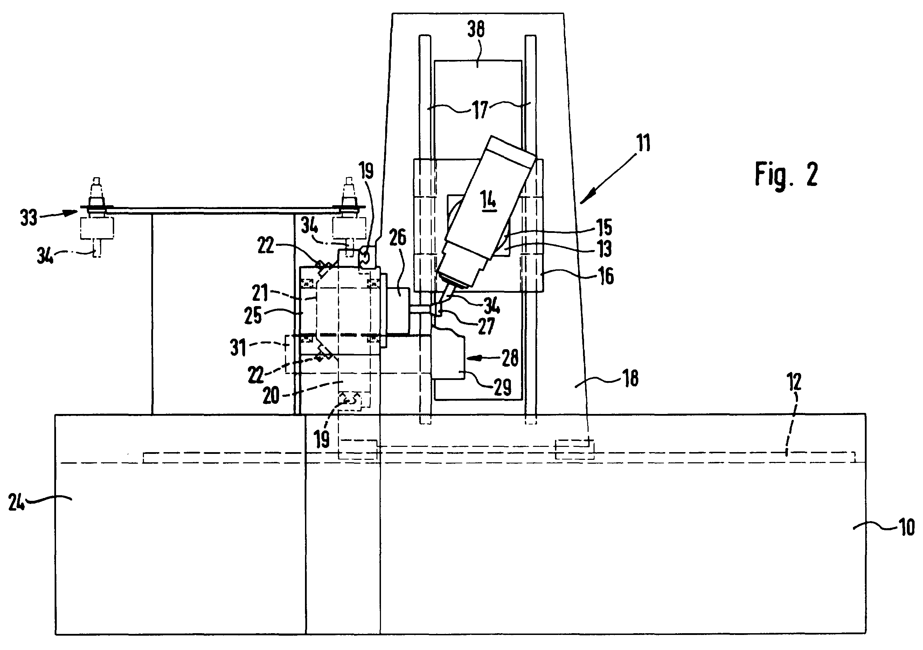

Die in den Fig. 1 bis 4 dargestellte Maschine besteht aus einem Untergestell 10, auf dem eine Schlittenanordnung 11 längsverfahrbar angeordnet ist. Hierzu dienen zwei Führungsschienen 12. Die Schlittenanordnung besteht dabei aus drei motorisch angetriebenen und positionierbaren Schlitten 13, 16, 18, die in den drei zueinander senkrechten Raumrichtungen X, Y und Z bewegbar sind.

An einem ersten horizontal verfahrbaren Schlitten 13 ist ein Bearbeitungskopf 14 (Spindelaufnahme) mittels einer Schwenkeinrichtung 15 um eine horizontale Achse, die in der Bewegungsrichtung des ersten Schlittens 13 verläuft, schwenkbar gelagert. Zum Verschwenken des Bearbeitungskopfs 14 dient ein nicht dargestellter motorischer Drehantrieb. Dieser erste Schlitten 13 ist horizontal verfahrbar in einem zweiten Schlitten 16 geführt, der an zwei vertikalen Führungsschienen 17 vertikal verfahrbar ist. Diese beiden vertikalen Führungsschienen 17 sind an einem dritten Schlitten 18 angeordnet, der turmartig gestaltet ist und an den beiden Führungsschienen 12 auf dem Untergestell 10 horizontal verfahrbar ist. Die Bewegungsrichtung des dritten Schlittens 18 verläuft dabei senkrecht zur Bewegungsrichtung des ersten Schlittens 13. Der dritte Schlitten 18 weist eine Durchgangsöffnung 38 in der Bewegungsrichtung des ersten Schlittens 13 auf, um insbesondere auch die Vertikalbewegung dieses ersten Schlittens 13 mittels des zweiten Schlittens 16 zu ermöglichen.

Seitlich am dritten Schlitten 18 ist ein mittels zwei horizontalen Führungsschienen 19 horizontal verschiebbarer weiterer Schlitten 20 angeordnet, der seitlich eine um eine horizontale Achse drehbare Drehrevolver-Halterung 21 zur Aufnahme von mehreren Drehmeißeln 22 aufweist. Die Bewegungsrichtung dieses weiteren Schlittens 20 entspricht der des ersten Schlittens 13, jedoch besitzt dieser weitere Schlitten 20 keinen eigenen motorischen Antrieb. Zum Antrieb des weiteren Schlittens 20 besitzt der erste Schlitten 13 an seinem vom Bearbeitungskopf 14 entgegengesetzten Endbereich hinter dem turmartigen dritten Schlitten 18 eine Kopplungseinrichtung 23, die zum Ankoppeln und Entkoppeln des ersten Schlittens 13 mit dem weiteren Schlitten 20 ausgebildet ist. Zum Ankoppeln wird der zweite Schlitten 16 so lange vertikal nach unten bewegt, bis diese Kopplungseinrichtung 23 am ersten Schlitten 13 in den weiteren Schlitten 20 einkoppelt. Wird nun der erste Schlitten 13 in dieser untersten Position zur Bearbeitungsseite hin bewegt, so bewegt er infolge der Ankopplung den weiteren Schlitten 20 mit der Drehrevolver-Halterung 21 mit. Der Bearbeitungskopf 14 wird dabei zwar ebenfalls mitbewegt, er weist jedoch im angekoppelten Zustand eine so tiefe Position auf, daß er bei der Drehbearbeitung eines Werkstücks durch einen Drehmeißel 22 der Drehrevolver-Halterung 21 nicht stört. Zur Entkopplung wird der erste Schlitten 13 wiederum in die entgegengesetzte Richtung bewegt, bis der weitere Schlitten 20 wiederum die in Fig. 1 dargestellte Ruheposition erreicht. Dann erfolgt eine Entkopplung beispielsweise dadurch, daß sich der zweite Schlitten 16 mit dem ersten Schlitten 13 vertikal nach oben bewegt, so daß nunmehr eine Fräs-, Bohr- oder Schleifbearbeitung eines Werkstücks durch den Bearbeitungskopf 14 erfolgen kann.

Das Untergestell 10 besitzt bearbeitungsseitig einen seitlichen tischartigen Fortsatz 24, auf dem eine Werkstück-Spanneinrichtung 25 angeordnet ist. Diese besitzt ein drehbar gelagertes Spannfutter 26 für Werkstücke, das durch einen nicht dargestellten motorischen Antrieb um eine horizontale Längsachse rotiert werden kann. Diese Rotation erfolgt bei einer Bearbeitung durch den Bearbeitungskopf 14 zur Winkelpositionierung nach Art eines Teilantriebs und zur Drehbearbeitung mittels eines Drehmeißels 22 mit höheren, für die Drehbearbeitung geeigneten Drehzahlen.

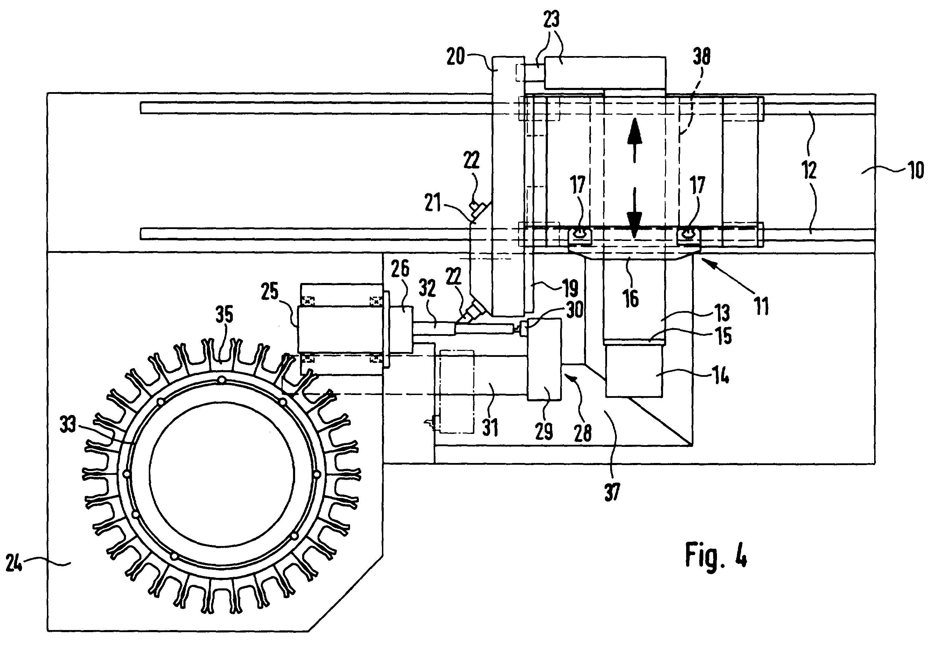

Zur präzisen Halterung von längeren Werkstücken bei der Drehbearbeitung dient ein Reitstock 28, der eine an einer Schwenkhalterung 29 angeordnete Zentrierspitze 30 aufweist. Diese Schwenkhalterung 29 ist an einem horizontal und parallel zur Drehachse des Spannfutters 26 verschiebbaren Haltearm 31 schwenkbar gelagert. In Fig. 4 ist der Haltearm 31, der ebenfalls einen motorischen Positionierantrieb besitzt, ausgefahren, und die Zentrierspitze 30 ist mittels der Schwenkhalterung 29 in die Drehachse des Spannfutters 26 eingeschwenkt und hält dort das freie Ende eines stangenartigen Werkstücks 32, das mittels eines Drehmeißels 22 bearbeitet wird. Wird der Reitstock 28 nicht benötigt, so wird die Schwenkhalterung 29 in die strichpunktiert dargestellte Ruhestellung bzw. in die in Fig. 1 dargestellte Ruhestellung zurückbewegt. Selbstverständlich können längere Werkstücke auch dann mittels des Reitstocks 28 zusätzlich gehalten werden, wenn eine Bearbeitung durch den Bearbeitungskopf 14 erfolgt.

Auf dem tischartigen Fortsatz 24 ist weiterhin ein horizontales, motorisch drehbares Werkzeugmagazin 33 angeordnet, das zur Aufnahme einer Vielzahl von Werkzeugen bzw. von in Werkzeughalterungen gehaltenen Werkzeugen 34 dient. Zum Wechseln eines Werkzeugs wird der vertikal positionierte Bearbeitungskopf 14 mittels des dritten Schlittens 18 zum Werkzeugmagazin 33 hin bewegt, wobei durch Vertikalbewegung durch den zweiten Schlitten 16 das nicht mehr benötigte Werkzeug in die dem Untergestell 10 zugewandte Werkzeughalterung 35 des Werkzeugmagazins 33 eingesetzt wird. Danach wird das Werkzeugmagazin 33 gedreht, bis das jetzt gewünschte Werkzeug in der entsprechenden Übergabeposition positioniert ist. Die Aufnahme erfolgt dann wiederum mit Hilfe einer Vertikalbewegung des zweiten Schlittens 16.

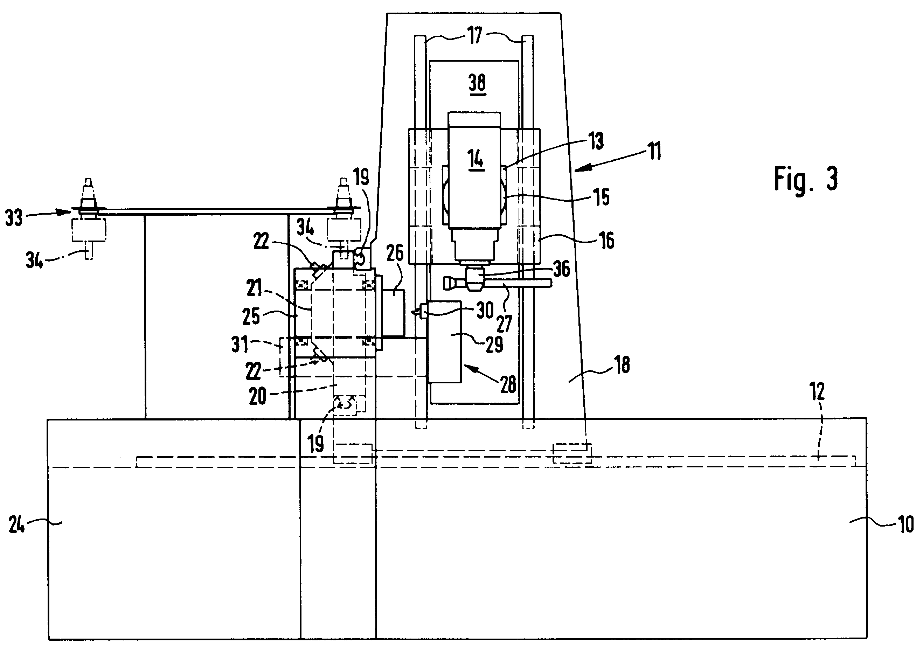

Das Werkzeugmagazin 33 kann neben Werkzeugen auch noch Greif- und/oder Handhabungseinrichtungen 36 für den Bearbeitungskopf 14 aufweisen. In Fig. 3 ist der Bearbeitungskopft 14 mit einer solchen Greif- und/oder Handhabungseinrichtung 36 versehen, die zum Ergreifen und Handhaben eines Werkstücks 27 dienen. Beispielsweise kann das Werkstück 27 nach der Bearbeitung (Drehbearbeitung oder Bearbeitung durch den Bearbeitungskopf 14) mittels dieser Greif- und/oder Handhabungseinrichtung 36 ergriffen, aus dem Spannfutter 26 entnommen, um 180° geschwenkt und wieder in das Spannfutter 26 eingesetzt werden. Nun kann der zweite Endbereich dieses Werkstücks 27 in der gewünschten Weise bearbeitet werden.

Zur Stangenbearbeitung, wie sie beispielsweise im eingangs angegebenen Stand der Technik beschrieben ist, kann ein Stangenmagazin vorgesehen sein, wie es dort beschrieben ist. Aus diesem Stangenmagazin werden nacheinander Stangen entnommen und in die Werkzeug-Spanneinrichtung 25 eingesetzt. Nach der Bearbeitung des freien Endbereichs einer solchen Stange, vor allem durch den Bearbeitungskopf 14, wird das so gebildete fertige Teil abgetrennt, die Stange entsprechend nachgeschoben und durch gleiche Bearbeitung des freien Endbereichs das nächste Teil bearbeitet. Zum Abtrennen kann eine nicht dargestellte Abtrenneinrichtung vorgesehen sein, oder aber der Bearbeitungskopf 14 holt sich ein Trennwerkzeug aus dem Werkzeugmagazin 33 und trennt den jeweils fertigbearbeiteten Endbereich der Stange ab. Alternativ hierzu kann ein Abtrennen auch durch einen Abstechmeißel an der Drehrevolver-Halterung 21 erfolgen. Auch der schrittweise Vorschub der Stange kann durch eine nicht dargestellte Vorschubeinrichtung oder mittels des Bearbeitungskopfs 14 erfolgen.

Unterhalb des Bearbeitungsbereichs, also des Bereichs unterhalb des Spannfutters 26, ist ein wannenartiger Aufnahmebereich 37 für Späne, Schmiermittel und eventuell auch fertigbearbeitete Werkstücke vorgesehen, die von dort aus der Entsorgung, Wiederaufbereitung, Weiterverwendung oder Weiterbehandlung zugeführt werden können.

In Abweichung vom dargestellten Ausführungsbeispiel ist es selbstverständlich auch möglich, die drei Schlitten der Schlittenanordnung 11 in anderer Reihenfolge und mit vertauschten Bewegungsrichtungen anzuordnen. Falls eine Drehbearbeitung nicht erforderlich oder erwünscht ist, können die Drehrevolver-Halterung 21 sowie der zugehörige Schlitten 20 auch entfallen.

## Patentansprüche

1. Maschine zur spanenden Bearbeitung von insbesondere stangenförmigen Werkstücken, mit einem in mehreren Achsen mittels einer Schlittenanordnung bewegbaren Bearbeitungskopf zur Aufnahme rotierender Werkzeuge und mit einer Werkstück-Spanneinrichtung, die mit einer Drehantriebsvorrichtung zur Winkelpositionierung des eingespannten Werkstücks versehen ist, dadurch gekennzeichnet, daß der Bearbeitungskopf (14) schwenkbar an der mit motorischen Antriebsvorrichtungen versehenen, aus drei in den drei Raumrichtungen bewegbaren Schlitten bestehenden Schlittenanordnung (11) gelagert ist und einen motorischen Schwenkantrieb besitzt, und daß die Werkstück-Spanneinrichtung (25) eine horizontale Drehachse aufweist.

2. Maschine nach Anspruch 1, dadurch gekennzeichnet, daß die Schlittenanordnung (11) parallel zur Drehachse der Werkstück-Spanneinrichtung (25) versetzt zu dieser linear verfahrbar ist.

3. Maschine nach Anspruch 1 oder 2, dadurch gekennzeichnet, daß ein insbesondere als horizontales Drehmagazin ausgebildetes Werkzeugmagazin (33) für rotierende Werkzeuge (34) vorgesehen ist und daß die Schlittenanordnung (11) zur Bewegung des Bearbeitungskopfs (14) zwischen der Arbeitsposition und der Werkzeugwechselposition am Werkzeugmagazin (33) ausgebildet ist.

4. Maschine nach Anspruch 3, dadurch gekennzeichnet, daß das Werkzeugmagazin (33) auch vom Bearbeitungskopf (14) aufnehmbare Greif- und/oder Handhabungseinrichtungen (36) enthält, wobei der mit einer solchen Greif- und/oder Handhabungseinrichtung (36) versehene Bearbeitungskopf (14) zur Handhabung von Werkstücken (27) ausgebildet ist.

5. Maschine nach einem der vorhergehenden Ansprüche, dadurch gekennzeichnet, daß zur Bearbeitung von stangenförmigen Werkstücken ein Stangenmagazin und eine Vorschubeinrichtung zum Vorschub des jeweils in der Werkstück-Spanneinrichtung (25) gehaltenen Werkstücks in dessen Längsrichtung vorgesehen ist.

6. Maschine nach einem der vorhergehenden Ansprüche, dadurch gekennzeichnet, daß zur Bearbeitung von Stangenförmigen Werkstücken eine insbesondere durch den Bearbeitungskopf (14) gebildete Abtrenneinrichtung für den jeweils bearbeiteten Endbereich eines stangenförmigen Werkstücks vorgesehen ist.

7. Maschine nach einem der vorhergehenden Ansprüche, dadurch gekennzeichnet, daß eine Drehmeißel-Halterung (21) zwischen einer Warteposition und einer Arbeitsposition mittels der Schlittenanordnung (11) bewegbar ist und daß die Drehantriebsvorrichtung zur Rotation der Werkstück-Spanneinrichtung (25) auch einen für die Drehbearbeitung geeigneten Drehzahlbereich aufweist.

8. Maschine nach Anspruch 7, dadurch gekennzeichnet, daß die Drehmeißel-Halterung (21) an einem Schlitten (20) angeordnet ist, der durch einen in der entsprechenden Richtung, insbesondere der horizontalen Richtung zum Werkstück hin, bewegbaren ersten Schlitten (13) der Schlittenanordnung (11) antreibbar ist.

9. Maschine nach Anspruch 8, dadurch gekennzeichnet, daß eine lösbare Kopplungseinrichtung (23) zwischen dem Schlitten (20) der Drehmeißel-Halterung (21) und dem diesen antreibenden ersten Schlitten (13) der Schlittenanordnung (11) vorgesehen ist.

10. Maschine nach Anspruch 9, dadurch gekennzeichnet, daß ein senkrecht zur Bewegungsrichtung des ersten Schlittens (13), insbesondere vertikal bewegbarer zweiter Schlitten (16) der Schlittenanordnung (11) den ersten Schlitten (13) mit dem Schlitten (20) der Drehmeißel-Halterung (21) verkoppelt und entkoppelt, wobei der Schlitten (20) der Drehmeißel-Halterung (21) der Bewegung des zweiten Schlittens (16) nicht folgt.

11. Maschine nach Anspruch 10, dadurch gekennzeichnet, daß die Kopplungsposition eine unterste Position, insbesondere die unterste Position des zweiten Schlittens (16), ist, wobei der mit diesem zweiten Schlitten mitbewegte Bearbeitungskopf in der Kopplungsposition unterhalb der Drehachse der Werkstück-Spanneinrichtung (25) angeordnet ist.

12. Maschine nach einem der vorhergehenden Ansprüche, dadurch gekennzeichnet, daß ein dritter Schlitten (18) eine Bewegungsrichtung senkrecht zu der der übrigen Schlitten (13, 16) der Schlittenanordnung (11) besitzt und parallel zur Drehachse der Werkstück-Spanneinrichtung (25) verfahrbar ist, wobei der dritte Schlitten (18) insbesondere die übrigen Schlitten (13, 16) sowie vorzugsweise den Schlitten (20) der Drehmeißel-Halterung (21) trägt.

13. Maschine nach einem der vorhergehenden Ansprüche, dadurch gekennzeichnet, daß die Drehmeißel-Halterung (21) als Drehrevolver-Halterung ausgebildet ist.

14. Maschine nach einem der vorhergehenden Ansprüche, dadurch gekennzeichnet, daß neben oder an der Werkstück-Spanneinrichtung (25) ein parallel zu deren Drehachse verfahrbarer und in diese Drehachse einschwenkbarer Reitstock (28) vorgesehen ist.
